# EUROPEAN PATENT APPLICATION

(11) **EP 2 797 158 A1**
(43) Date of publication of application: **29.10.2014**
(21) Application number: 12821223.0
(22) Date of filing: 08.02.2012
(51) Int. Cl.: H01M 10/52, H01M 10/50

(54) **CELL SYSTEM**

(71) Applicant: Hitachi, Ltd., Tokyo 100-8280 (JP)
(72) Inventor: TAKEDA, Kenji, Hitachi-shi Ibaraki 319-1292 (JP)
(74) Representative: Beetz & Partner
(86) International application number: PCT/JP2012/000814
(87) International publication number: WO 2013/118166

(57) **Abstract**

Exhaust of combustible gas is satisfied while reducing a rating air volume of fans.

A battery system comprising a battery rack having a plurality of battery sub-racks in which a plurality of battery modules are accommodated, wherein the battery sub-racks each include a first fan and a gas detecting apparatus, the battery rack includes a second fan configured to exhaust the air exhausted from the first fan of a plurality of the battery sub-racks, the second fan is configured to have a rating air volume larger than the rating air volume of the first fan, and when a predetermined gas is sensed by the gas detecting apparatus of one of the battery sub-racks, the second fan is driven in a state in which the first fan of the one of the battery sub-racks is driven, and the first fans of the battery sub-racks other than the one of the battery sub-racks are stopped.

## Description

### Technical Field

The present invention relates to a battery system including a plurality of single batteries connected in series and parallel.

### Background Art

In a battery system of the related art, when a battery is charged or discharged in an abnormal state, gas is generated in the interior of the battery and the internal pressure is increased, which may results in burst, and hence a safety valve configured to prevent the burst is provided in a cell to discharge a content of the battery to the outside of the cell. In such a case, since a lithium ion battery exhausts combustible gas from the safety valve, further reliably safety may be maintained as an entire system by diluting the combustion gas to the level of an explosion limit or lower by quick mixing with outside air. Here, in order to dilute combustible gas, an exhaust fan is required to circulate sufficient air volume. In a battery system according to PLT 1, a mechanism configured to exhaust gas by interlocking an exhaust fan with a combustible gas sensor is disclosed.

Incidentally, the total number of individual single battery cells which constitute an apparatus is enormous in association with increase in size of the battery system. When increasing the mounting density of the battery cells in the apparatus, a system of radiating heat while circulating cooling air from the outside is performed because loss of the battery cells works as a heat generating source (PLT 2).

### Citation List

### Patent Literatures

PTL1: JP-A-11-86891
PTL2: JP-A-2005-243580

### Summary of Invention

### Technical Problem

Here, since the cooling air for heat radiation generally employs a system of driving by a fan or the like, a configuration in which the combustible gas is exhausted by cooling air is contemplated.

However, when an attempt is made to interlock a signal of the combustible gas sensor with a cooling fan of such a battery system, since the air volume required for exhausting the combustible gas is larger than the air volume required for cooling, a design with a large rating air volume of the fan is required, which results in increase in size of the cell system.

In view of such circumstances, it is an object of the present invention to provide a battery system configured to encourage exhaust of the combustible gas while inhibiting an increase in size of the battery system.

### Solution to Problem

In order to achieve the above-described object, a battery system according to the embodiments of the present invention includes a battery rack having a plurality of battery sub-racks in which a plurality of battery modules are accommodated, and is characterized in that the battery sub-racks each include a first fan and a gas detecting apparatus, the battery rack includes a second fan configured to exhaust the air exhausted from the first fan of the plurality of battery sub-racks, the second fan is configured to have a rating air volume larger than the rating air volume of the first fan, and when a predetermined gas is sensed by the gas detecting apparatus of one of the battery sub-racks, the second fan is driven in a state in which the first fan of the one of the battery sub-racks is driven, and the first fans of the battery sub-racks other than the one of the battery sub-racks are stopped.

### Advantageous Effects of the Invention

By using the present invention, a battery system configured to be capable of encouraging exhaust of combustible gas while inhibiting an increase in size is provided. Brief Description of Drawings

[Fig. 1] Fig. 1 is a drawing illustrating an outline of a battery system according to the present invention.
[Fig. 2] Figs. 2(a) and (b) are cross-sectional views of a battery sub-rack 2 according to the present invention.
[Fig. 3] Fig. 3 is a drawing illustrating an input and an output of a control signal in a battery rack 1 according to the present invention.
[Fig. 4] Fig. 4 is a block diagram of a control apparatus 8 according to the present invention.
[Fig. 5] Fig. 5(a) shows how a collective fan 3 works according to a first example, and Fig. 5(b) shows control of a individual fan 7 according to the first example.
[Fig. 6] Fig. 6 is a drawing showing a control process flow of the control apparatus 8 according to the present invention.
[Fig. 7] Fig. 7 is a drawing illustrating the battery system according to a second example of the present invention.
[Fig. 8] Fig. 8 is a drawing illustrating a battery module M11 according to the present invention in detail.
[Fig. 9] Fig. 9 is a block diagram illustrating the control apparatus 8 according to the second example of the present invention.
[Fig. 10] Fig. 10(a) shows how a collective fan 3 works according to the first example, and Fig. 10(b) shows control of the individual fans 7 according to the first example.
[Fig. 11] Fig. 11 is a drawing illustrating a battery system according to a third example of the present invention.
[Fig. 12] Fig. 12 shows control of individual fans 70 according to the third embodiment of the present invention. Description of Embodiments

A battery system according to embodiments of the present invention will be described in detail with reference to the drawings.

### (First Example)

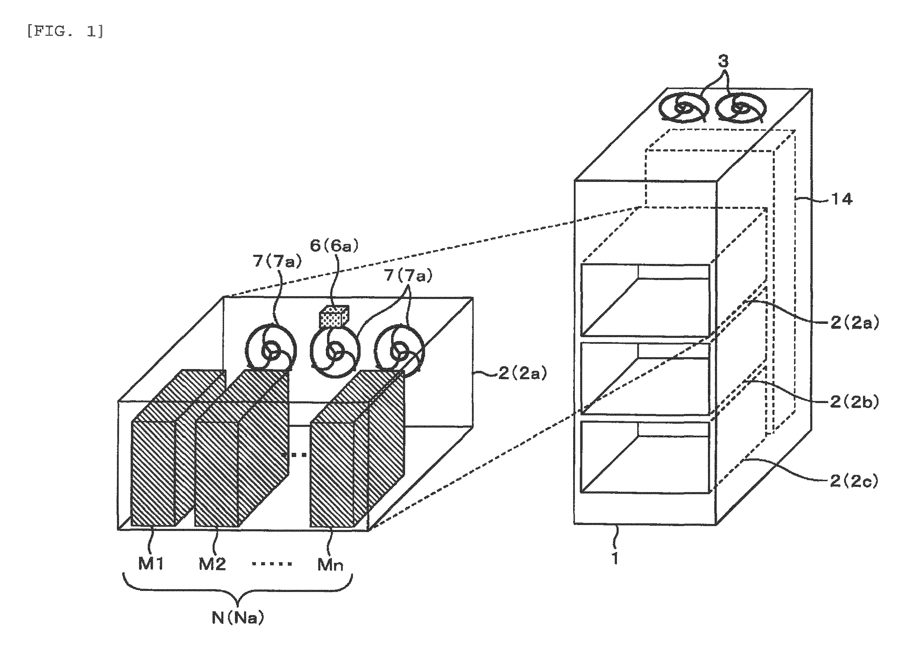

First of all, the battery system according to the embodiment of the present invention will be described with reference to Fig. 1. Fig 1 is a drawing illustrating an outline of the battery system. The battery system of the present invention includes a battery rack 1, and a plurality of levels of battery sub-racks 2 are mounted in the interior of the battery rack 1, and the battery sub-rack 2 is configured to accommodate a battery module group N (Na) including a plurality of battery modules M1 to Mn arranged side by side. The plurality of battery modules M1 to Mn has a structure to achieve cooling of the battery module by circulating outside air through gaps between the battery modules M1 to Mn and the battery rack 1 and through the gaps between the battery sub-racks 2. In this configuration, the respective battery modules can be cooled uniformly. Also, means for circulating the outside air includes collective fans 3 on the battery rack 1, and individual fans 7 on the battery sub-racks 2 and is configured to supply and exhaust outside air through the collective fans as the air circulating through the individual fans 7. Here, both of the collective fans 3 and the individual fans 7 only have to have a structure which can feed air pneumatically, and may be replaced by a pump, a blower, or the like. The individual fans 7 have a function to supply and exhaust the outside air from the front side of the battery rack 1 into a flow channel space 14 provided in the back of the battery rack 1. The collective fans 3 have a function to exhaust the outside air exhausted into the above-described flow channel space 14 in bulk. When the collective fan 3 described later is used, with this configuration, the air can be flowed into a battery sub-rack 2a by a volume larger than normal when the individual fans 7 installed on battery sub-racks 2b and 2c other than that on the battery sub-rack 2a, for example, are stopped.

Here, the collective fans 3 and the individual fans 7 do not necessarily have to be a single fan, and may each include a plurality of fans arranged side by side. The respective fans are selected so that air volume of the collective fans 3 becomes larger than the air volume of the individual fans 7. In this configuration, the volume of air flowing into the battery sub-rack 2a may be increased when the individual fans 7 arranged on the battery sub-racks 2b and 2c other than that on the battery sub-rack 2a are stopped.

More specifically, when it is contemplated that where there are 3n pieces of the battery sub-racks 2 mounted on the battery rack 1, the rating air volume of the collective fans 3 is set to a value on the order of 3n times the rating air volume of the individual fans 7.

The battery sub-racks 2 are individually provided with gas leakage sensing apparatuses 6 and gas generated when abnormality occurs in the battery modules M1 to Mn is detected by the gas leakage sensing apparatuses 6. In this embodiment, since a lithium ion battery is assumed as the battery cell, hydrogen gas or volatile gas of a carbonate system solvent as electrolytic liquid are considered as the gas generated therefrom.

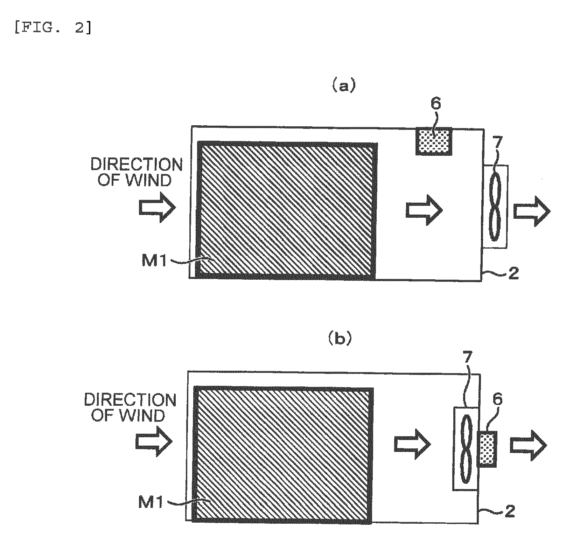

Fig. 2 (a) and Fig. 2 (b) are cross-sectional views of the battery sub-rack 2 illustrating the battery sub-rack 2 in detail. As illustrated, the gas leakage sensing apparatus 6 may be mounted at a position which comes always on the downstream side of the cooling air in comparison with the battery module group N. For reference, the position of the gas leakage sensing apparatus 6 may be arranged either inside the battery sub-rack 2 as illustrated in Fig. 2(a), or outside the battery sub-rack 2 as illustrated in Fig. 2(b). Also, the individual fan 7 may be arranged on the outside of the battery sub-rack 2 as illustrated in Fig. 2 (a) or on the inside of the battery sub-rack 2 as illustrated in Fig. 2(b).

Furthermore, the gas leakage sensing apparatus 6 may be enhanced in detection sensitivity by being selectively arranged on the upper side or the lower side in the vertical direction according to the component of the detected gas. For example, it is contemplated that the gas leakage sensing apparatus 6 is arranged at the upper portion of the battery sub-rack 2 when detection of light gas as hydrogen gas is wanted and, in contrast, the gas leakage sensing apparatus 6 is arranged at the lower portion of the battery sub-rack 2 when the detection of the gas heavier than the specific gravity of the air is wanted.

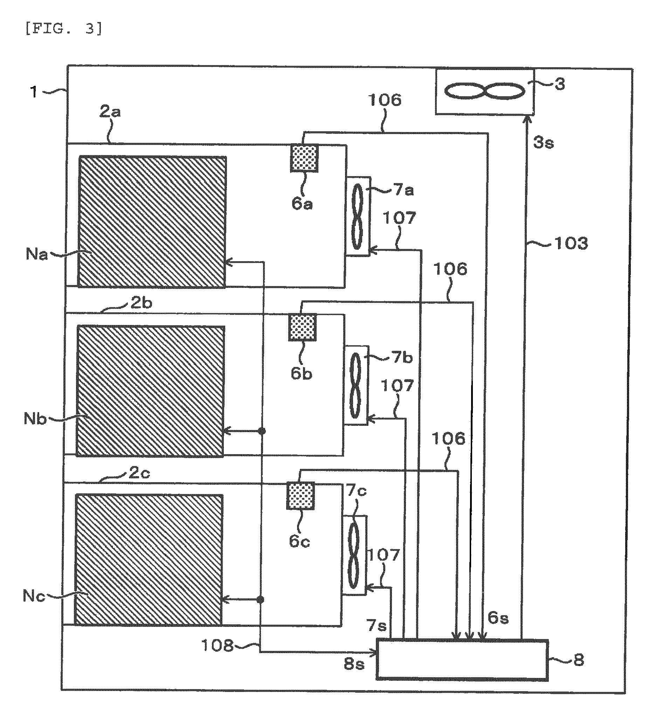

Fig. 3 shows a signal connection in the interior of the battery rack 1. A control apparatus 8 provided in the battery rack 1 acquires a gas sensing signal 6s of all of the gas leakage sensing apparatuses 6 (6a to 6c) in the interior of the battery rack 1 via gas sensing signal communication lines 106, and monitors whether there is gas leakage in the battery modules in each of the respective battery sub-racks 2. The control apparatus 8 also outputs an individual fan operating signal 7s configured to control the driving and stopping of the respective individual fans 7 (7a to 7c) in the interior of the battery rack 1 via individual fan operation signal lines 107. The control apparatus 8 is also connected to the collective fans 3 via a collective fan control signal communication line 103 and further outputs the collective fan operation signal 3s that controls driving and stopping of the collective fans 3. Methods of controlling the individual fans 7 (7a to 7c) and the collective fan 3 will be described in detail later. The control apparatus 8 communicates information with the battery modules M1 to Mn which constitute a battery module group N (Na to Nc) via a communication line 108, and acquires battery information signals 8s as various parameters of the interiors of the respective battery modules M1 to Mn.

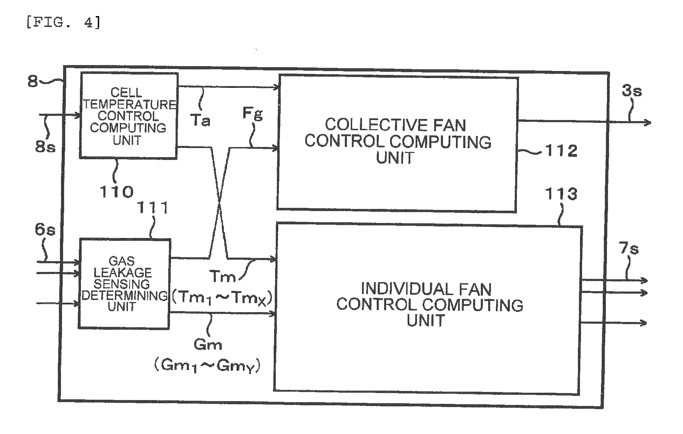

Fig. 4 is a drawing showing a signal process flow performed in the interior of the control apparatus 8. First of all, the battery information signals 8s of the respective battery modules M1 to Mn are input to a cell temperature control computing unit 110 via the communication line 108. Here, the cell temperature control computing unit 110 computes a collective fan operation command Ta and an individual fan operation command Tm when the temperature is increased to a degree which gives irreversible damage on the battery cell in the interior of the battery module by using temperature information, various items of voltage information, and current information in the interiors of the respective battery modules as the battery information signal 8s. For example, when the temperature is increased in terms of the battery modules belonging to the respective battery sub-racks 2, the individual fan operation command Tm is changed so as to operate the individual fans 7 corresponding to the respective battery sub-racks 2. It is also possible to change the collective fan operation command Ta when the average of the temperature information of all the battery modules exceeds a predetermined threshold value. Subsequently, the computed collective fan operation command Ta is output from the cell temperature control computing unit 110 to a collective fan control computing unit 112, and the computed individual fan operation command Tm is output to an individual fan control computing unit 113.

In contrast, a gas leakage sensing determining unit 111 monitors the gas sensing signal 6s from the gas leakage sensing apparatuses 6 (6a to 6c) installed in the respective battery sub-racks 2 and, if even one of the gas sensing signals 6s senses gas leakage, the gas leakage sensing determining unit 111 changes a leakage sensing signal Fg to output to the collective fan control computing unit 112. If the gas leakage sensing determining unit 111 senses the gas leakage, the gas leakage sensing determining unit 111 determines which one of the battery sub-racks 2 the gas sensing signal 6s is sensed from, and then outputs determined leakage sub-rack information Gm to the individual fan control computing unit.

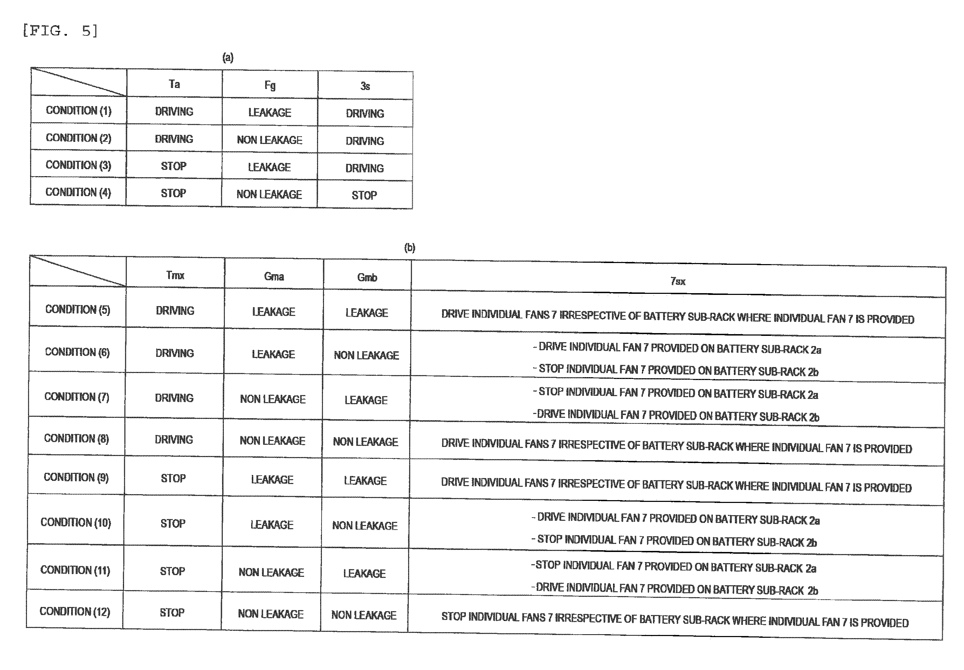

The collective fan operation command Ta and the gas leakage sensing signal Fg are input to the collective fan control computing unit 112. As shown in the table in Fig. 5(a), the collective fan control computing unit 112 outputs an operation command 3S to stop the fans when the leakage sensing signal Fg does not sense the leakage and the collective fan operation command Ta issues an instruction to stop the collective fan 3 (condition (4)). In other conditions (condition (1) to condition (3)), the collective fan operation command 3s is output so that the collective fan 3 is brought into a driven state. With such control, if there is no gas leakage and intensive cooling of the battery module is not required, operation of the battery system with the collective fan 3 consuming power more than the individual fan 7 stopped is achieved. Therefore, high safety control is achieved while reducing power consumption as the entire battery system.

In contrast, individual fan operation commands Tm (Tmₓ (X is 1 to p)) and the leakage sub-rack information Gm (Gm_{y} (Y is the number of sub-racks) on p pieces of individual fans 7 mounted on the battery rack 1 are input to the individual fan control computing unit 113. Although the number of the battery sub-racks is defined as 2 in order to simplify the description in this embodiment, the number of the battery sub-racks is not specifically limited. The leakage sub-rack information Gm is referred to as Gmₐ, Gm_{b} in this embodiment hereinafter so as to correspond to the battery sub-racks 2a, 2b.

Detailed processes to be performed are shown in the table in Fig. 5(b). First of all, in a case where the individual fan operation command Tmₓ (X is 1 to p) is a stop instruction and gas leakage does not occur in any of the battery sub-racks 2, an individual fan operating signal 7sₓ (X is 1 to p) to be output to each of the individual fans 7 is the stop instruction (condition (12)). In contrast, when the individual fan operation command Tmₓ is a drive instruction or a stop instruction and gas leakage is sensed in all of the battery sub-racks 2, the individual fan operating signal 7sₓ to be output to the respective individual fans 7 is the drive instruction (condition (5) or condition (9)). In a normal operating state in which the individual fan operation command Tmₓ is a drive instruction and no gas leakage is sensed in any of the battery sub-racks 2, the individual fan operating signal 7sₓ to be output to the respective individual fans 7 is the drive instruction as a matter of course (condition (8)).

Subsequently, in the table in Fig. 5(b), a case where gas leakage is sensed in any of the battery sub-rack 2a and 2b (condition (6), condition (7), condition (10) or condition (11) will be described. If gas leakage is sensed in any one of the battery sub-racks 2 as shown in the condition (6), the condition (7), the condition (10), or the condition (11)) in the table in Fig. 5(b), irrespective of whether the individual fan operation command Tmₓ is the drive instruction or the stop instruction, the individual fan 7 installed on the battery sub-rack 2 where the gas leakage occurs is driven. Then, the respective individual fans 7 installed on the battery sub-racks 2 where the gas leakage does not occur are stopped. Since the collective fans 3 are reliably driven in the state of gas leakage, and the rating air volume of the collective fans 3 is larger than that of each of the individual fans as described above, a larger volume of air can be fed to the battery sub-rack 2 where the gas leakage occurs temporarily by stopping the individual fans 7 installed on the battery sub-racks 2 where the gas leakage does not occur.

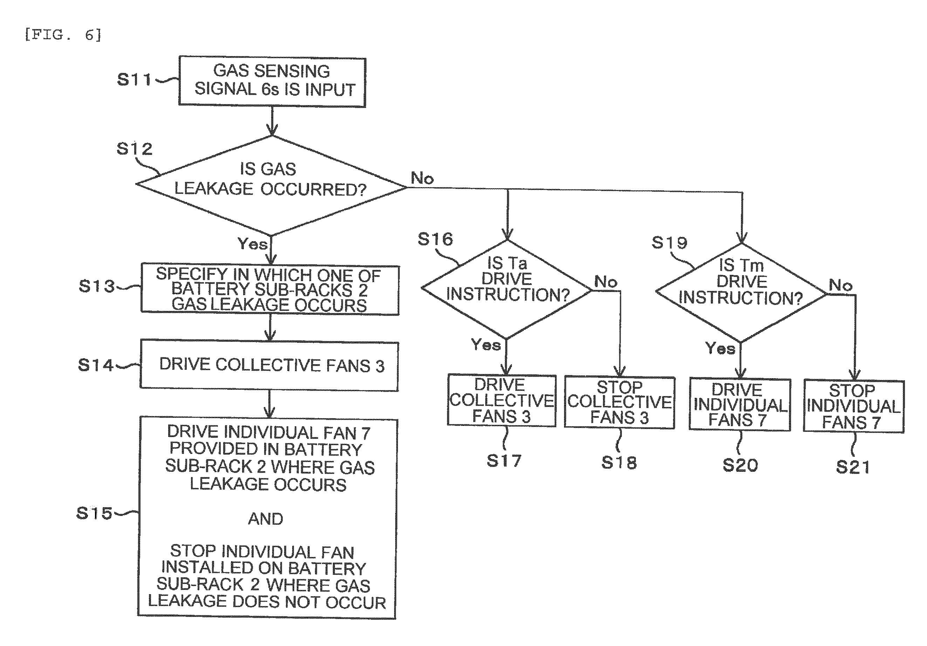

Subsequently, the control process flow chart in the control apparatus 8 when the gas leakage is sensed as described above is shown in Fig. 6. First of all, the gas sensing signal 6s is input to the control apparatus 8 (Step S11). Subsequently, the gas leakage sensing determining unit 111 determines whether or not the gas is leaked on the basis of the information of the gas sensing signal 6s (Step S12). When the gas leakage is not sensed here, the control flows of the collective fan 3 and the individual fan 7 go respectively to Step S16 and Step S19. Step S16 is a process in the collective fan control computing unit 112. The collective fan control computing unit 112 determines whether or not the collective fan operation command Ta output from the cell temperature control computing unit 110 is a drive instruction and, if it is the drive instruction, the procedure goes to Step S17, where the collective fans 3 are driven, and if it is the stop instruction, the procedure goes to Step S18 where the collective fans 3 are stopped.

Step S19 is a process in the individual fan control computing unit 113. The individual fan control computing unit 113 determines whether or not the individual fan operation command Tm output from the cell temperature control computing unit 110 is a drive instruction and, if it is the drive instruction, the procedure goes to Step S20, where the individual fans 7 are driven, and if it is the stop instruction, the procedure goes to Step S21, where the individual fans are stopped.

In contrast, when the gas leakage is sensed in Step S12, the procedure goes to Step S13, where the gas leakage sensing determining unit 111 specifies the battery sub-rack 2 where the gas leakage occurs. Subsequently, the procedure goes to Step S14, where the collective fan control computing unit 112 outputs the collective fan control signal 3s for driving the collective fans 3. Finally, the procedure goes to Step S15, where the individual fan control computing unit 113 outputs the individual fan operating signal 7s for driving the individual fan 7 installed in the battery sub-rack 2 where the gas leakage occurs, and also outputs the individual fan operating signal 7s to stop the individual fan 7 installed on the battery sub-rack 2 where the leakage of gas does not occur.

As described above, with the configuration as in this embodiment, when the gas leakage occurs in the interior of the battery sub-rack 2, the individual fan 7 of any one of the battery sub-racks where the gas leakage does not occur can be stopped and the collective fan 3 can be brought into the driven state. As a result, since the proportion of the air volume flowing into the battery sub-rack 2 where the gas leakage occurs from the air volumes of the collective fans 3 may be increased, compact individual fans 7 in which the rating air volume is reduced may be used as the individual fans 7 to be installed in the battery rack 1, which contributes to a reduction in size. Also, since an increase in size of the individual fans 7 may be inhibited, a loss of driving power source of the individual fans 7 may be reduced, so that a battery system in which the amount of power consumption is reduced is achieved. Although not describe above, in the battery system having three or more battery sub-racks, the above-described effect is realized only by stopping the individual fans of at least one of the battery sub-racks where the gas leakage is not sensed. As an example of a case of controlling in this manner, there is control to drive the individual fans of the battery sub-rack having a battery module having a high temperature on a priority basis and stop the individual fans of the battery sub-racks where no gas leakage occurs. In such control, increase in gas concentration may be prevented while preventing deterioration of the battery module having a high temperature.

### (Second Example)

A second example according to the present invention will be described. A point different from the first example is that respective fans are controlled on the basis of an abnormal voltage of the battery cell which constitutes the battery module. The same reference numerals are used for those which are not different from those in the first example.

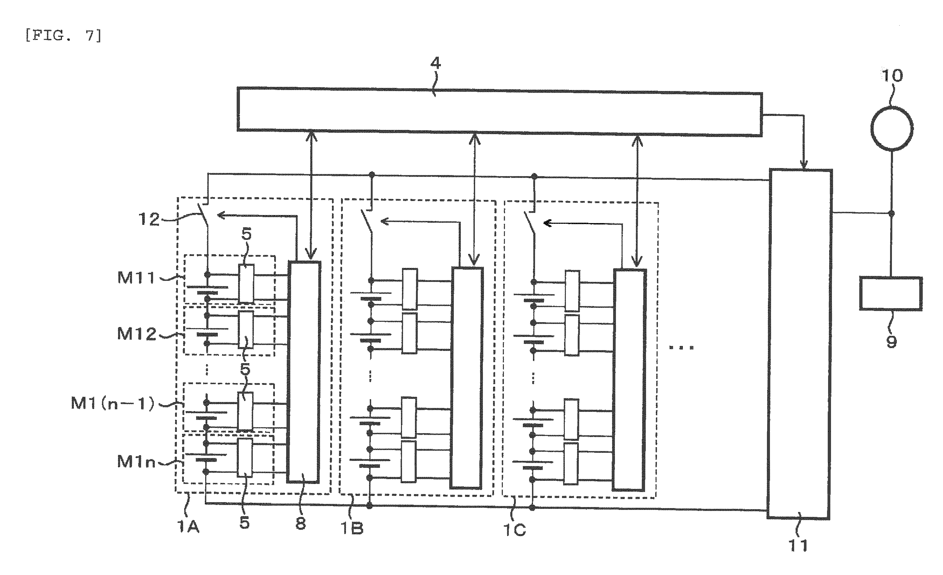

Fig. 7 is a drawing illustrating a battery system according to the second embodiment of the present invention. Battery racks 1A, 1B, 1C are all the same and output terminals thereof are connected, for example, in parallel. The battery rack is connected to a power converter 11 and is configured to be capable of transferring power with respect to an external power source 10 and a load 9 via the power converter 11. Here, for example, when the power converter 11 is a DC/AC converter, a commercial power system may be used as the external power source 10 and an AC load may be used as the load 9.

In the interior of the battery rack 1, the battery modules M11 to M1n are connected in series, and the control apparatus 8 monitors the voltages at both ends of the respective battery modules. A switch 12 is provided on part of a series circuit of the battery module, and the switch 12 can be opened and closed by an operation signal from the control apparatus 8. The control apparatus 8 is configured to receive the battery information signal 8s from a module control apparatus 5 so as to allow information communication with a centralized control apparatus 4 provided on the outside of the battery rack. The centralized control apparatus 4 is capable of operating the power converter 11 on the basis of the information obtained from the control apparatus 8. Although not illustrated in the drawings, the control apparatus 8 is provided in the interior of the battery rack 1.

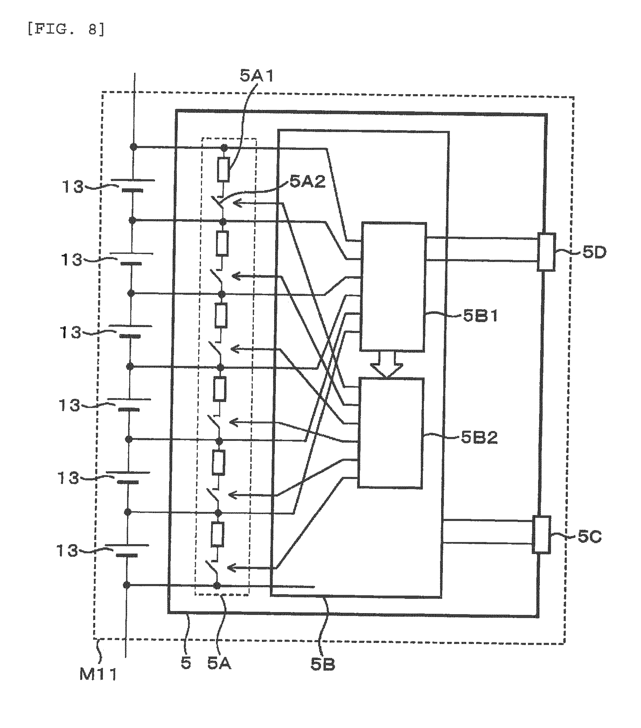

Fig. 8 illustrates the battery module M11 in detail. A plurality of unit battery cells 13 are connected in series in the interior of the battery module, and potentials of the both ends of the respective unit battery cells 13 are connected to the module control apparatus 5 and measured. The module control apparatus 5 is provided with a cell voltage balance unit 5A, a cell control circuit 5B, a contact point input/output unit 5C, and an external communication terminal 5D in the interior thereof. Here, the cell control circuit 5B has functions of a cell voltage measuring and computing unit 5B1 and a cell voltage balance control computing unit 5B2, the cell voltage measuring and computing unit 5B1 computes respective battery cell voltage information and the cell voltage balance control computing unit 5B2 specifies the battery cell having a high voltage according to the cell voltage information to drive the cell voltage balance unit 5A. The cell voltage balance unit 5A has a configuration in which a circuit including a resistance 5A1 and a switch apparatus 5A2 connected in series is connected at both ends of each of the cells.

Here, when an abnormal decrease or an abnormal increase is detected in the battery cell voltage information, the cell control circuit 5B drives the contact point input/output unit 5C. The abnormal increase here is, for example, a case where the voltage of 120% or more of the nominal voltage is generated, and the abnormal decrease is, for example, a case where the voltage is lowered to or below 0.5 V. When the leakage of combustible gas occurs, the battery cell is charged and discharged in an abnormal state. Therefore, the gas leakage may be predicted in advance by constantly monitoring the battery cell voltage. Therefore, when the abnormal voltage as described above is detected by the cell control circuit 5B, the individual fans and the collective fans may be switched to the mode at the time of the detection of leakage before the gas leakage sensing apparatus 6 senses the leakage by transmitting an abnormal voltage signal 5S from the contact point input/output unit 5C or the external communication terminal 5D to the control apparatus 8, so that the dilution effect of the combustible gas may be enhanced further reliably.

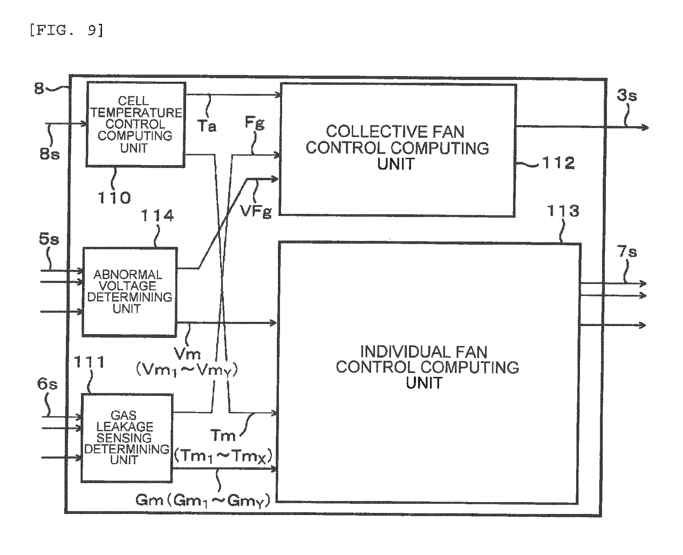

Referring now to Fig. 9, the content of the detailed control block will be described. Specifically, a point different from the first example is a point that an abnormal voltage determining unit 114 is provided in the interior of the control apparatus 8. When the abnormal voltage signal 5S described above is entered to the abnormal voltage determining unit 114, an abnormal voltage flag VFg is output from the abnormal voltage determining unit 114 to the collective fan control computing unit 112. The abnormal voltage determining unit 114 determines in which one of the battery modules M11 to M1n the abnormal voltage occurs, generates a signal which specifies a sub-rack having a battery module in which the abnormal voltage occurs, that is, generates an abnormal voltage sub-rack information Vm (VmY (Y corresponds to the number of sub-racks), and outputs the same to the individual fan control computing unit 113.

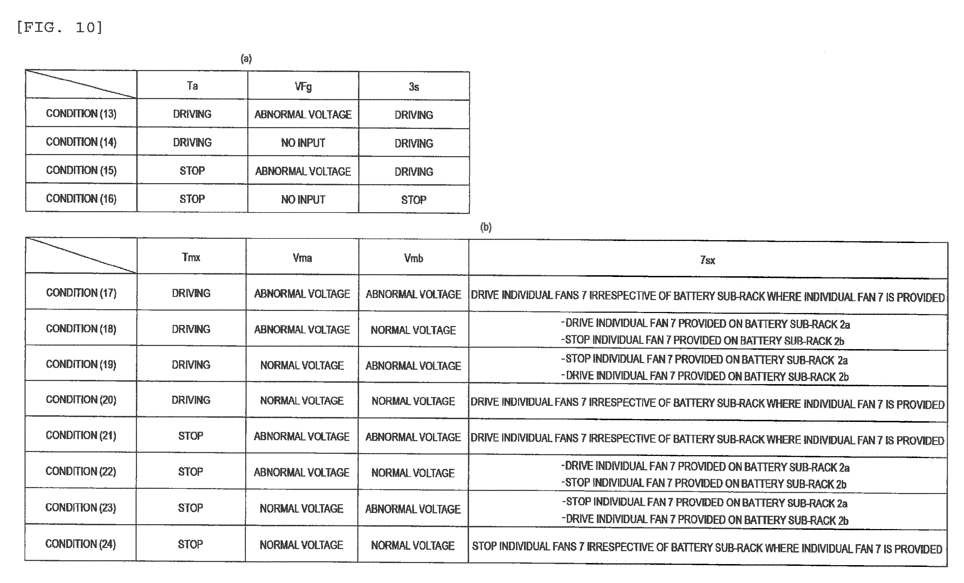

The collective fan operation command Ta and the abnormal voltage flag VFg are input to the collective fan control computing unit 112. As shown in the table in Fig. 10(a), the collective fan control computing unit 112 outputs the operation command 3S to stop the fans only when the abnormal voltage flag VFg is not input and the collective fan operation command Ta instructs the stop of the collective fan 3 (condition (16)). In other conditions (condition (13) to condition (15)), the collective fan operation command 3s is output so that the collective fan 3 is brought into a driven state. In such control, the collective fan 3 can be driven immediately when a sign of the gas leakage is found even though the gas leakage does not occur, and abrupt increase in gas concentration of a space in case of gas leakage can be prevented in advance.

Subsequently, the process in the individual fan control computing unit 113 will be described. Although the number of the battery sub-racks is defined as 2 in order to simplify the description in this embodiment, the number of the battery sub-racks is not specifically limited. The abnormal voltage sub-rack information Vm is referred to as Vmₐ, Vm_{b} in this embodiment hereinafter so as to correspond to the battery sub-racks 2a, 2b.

Detailed processes to be performed are shown in the table in Fig. 10(b). First of all, in a case where the individual fan operation command Tmₓ (X is 1 to p) is a stop instruction and there is no battery module in which abnormal voltage is generated in any of the battery sub-racks 2, the individual fan operating signal 7sₓ (X is 1 to p) to be output to each of the individual fans 7 is a stop instruction (condition (24)). In contrast, in a case where the individual fan operation command Tmₓ is the drive instruction or the stop instruction, and there is a battery module in which the abnormal voltage is generated in any of the battery sub-racks 2, the individual fan operating signal 7sₓ to be output to the respective individual fans 7 is the drive instruction (condition (17) or condition (21)). In a normal operating state in which the individual fan operation command Tmₓ is the drive instruction and there is no battery sub-rack 2 including the battery module in which the abnormal voltage is generated, the individual fan operating signal 7sₓ to be output to the respective individual fans 7 is the drive instruction as a matter of course (condition (20)).

Subsequently, in the table in Fig. 10(b), a case where gas leakage is sensed in any of the battery sub-rack 2a and 2b (condition (18), condition (19), condition (22) or condition (23) will be described. If a battery module in which the abnormal voltage is generated is sensed in any of the battery sub-racks 2 as shown in the condition (18), the condition (19), the condition (22) or the condition (23) in the table in Fig. 10(b), irrespective of whether the individual fan operation command Tmₓ is the drive instruction or the stop instruction, the individual fans 7 of the battery sub-rack 2 including the battery module in which the abnormal voltage is generated therein are driven. Then, the individual fans 7 installed in the battery sub-rack 2 having no battery module in which the abnormal voltage is generated are stopped. Since the collective fans 3 are reliably driven in the state in which the abnormal voltage is detected, and the rating air volume of the collective fans 3 is larger than that of each of the individual fans as described above, a larger volume of air can be fed to the battery sub-rack 2 having a battery module where abnormal voltage is generated temporarily by stopping the individual fans 7 installed on the battery sub-racks 2 where there is no battery module in which the abnormal voltage is generated. By performing the control as in this example, the individual fans and the collective fans may be switched to the mode at the time of the detection of leakage before the gas leakage sensing apparatus 6 senses the leakage, so that the dilution effect of the combustible gas may be enhanced further reliably. In addition, since the battery module generates heat often when the abnormal voltage is generated, cooling of the battery module in which the abnormal voltage is generated may be enhanced by using the control method described above, so that the gas leakage may be prevented in advance.

In this example, a case where the gas leakage occurs is not specifically described. However, at least when the gas leakage is sensed, the control according to the first example is performed even though the abnormal voltage is not generated as a matter of course.

### (Third Example)

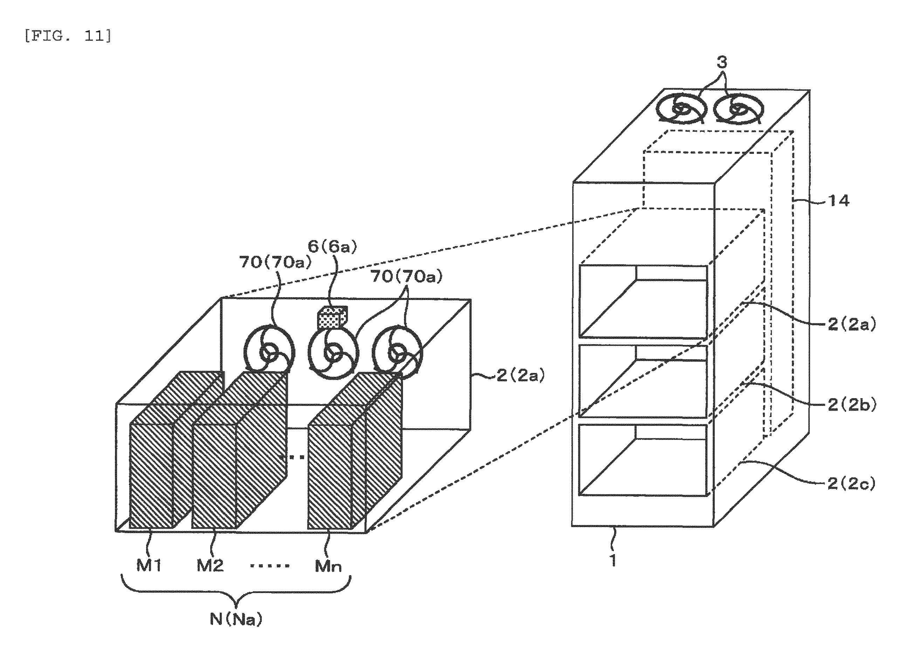

Fig. 11 shows a third example of the present invention. A point different from the first example is a point in which fans 70 (70a) which are capable of feeding air pneumatically in an opposite direction (direction of reverse rotation) from the forward direction (direction of forward rotation) are employed as the individuals fan 7. With the provision of the individual fans 70a, the direction of air flow is changed and hence the dilution effect of the combustible gas may be enhanced. For reference, the direction in which the air is flowed from the battery sub-rack 2 to the flow channel space 14 is referred to as the direction of forward rotation, and the direction in which the air is flowed from the flow channel space 14 to the battery sub-rack 2 is referred to as the direction of reverse rotation. Specific control block is the same as that shown in Fig. 4.

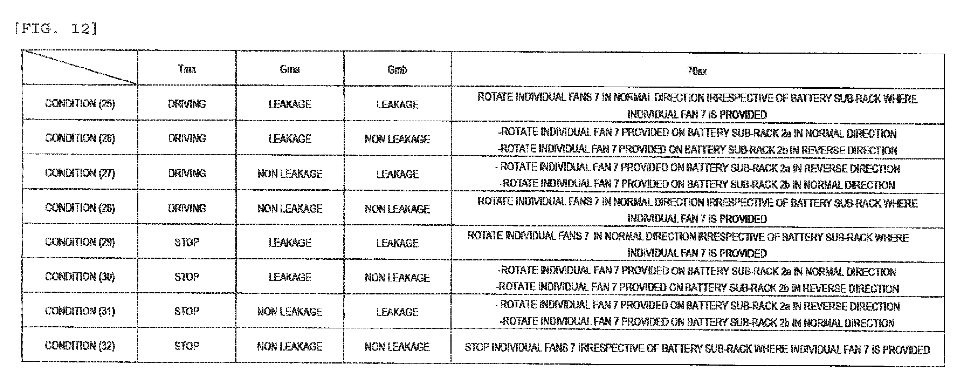

Fig. 12 shows how the individual fan control computing unit 113 works. Although the number of the battery sub-racks is defined as 2 in order to simplify the description in this embodiment, the number of the battery sub-racks is not specifically limited. The abnormal voltage sub-rack information Gm is referred to as Gmₐ, Gm_{b} in this embodiment hereinafter so as to correspond to the battery sub-racks 2a, 2b.

First of all, in a case where the individual fan operation command Tmₓ (X is 1 to p) is a stop instruction and gas leakage does not occur in any of the battery sub-racks 2, an individual fan operating signal 70sₓ (X is 1 to p) to be output to each of the individual fans 70 is a stop instruction (condition (32)). In contrast, when the individual fan operation command Tmₓ is a drive instruction or a stop instruction and gas leakage is sensed in all of the battery sub-racks 2, the individual fan operating signal 70sₓ to be output to the respective individual fans 70 is a forward rotation instruction (condition (25) or condition (29)). In a normal operating state in which the individual fan operation command Tmₓ is a drive instruction and no gas leakage is sensed in any of the battery sub-racks 2, the individual fan operating signal 70sₓ to be output to the respective individual fans 70 is the forward rotation instruction as a matter of course (condition (28)).

Subsequently, in the table in Fig. 12, a case where gas leakage is sensed in any of the battery sub-rack 2a and 2b (condition (26), condition (27), condition (30), or condition (31) will be described. If gas leakage is sensed in any of the battery sub-racks 2 as shown in the condition (26), the condition (27), the condition (30), or the condition (31) in the table in Fig. 12, irrespective of whether the individual fan operation command Tmₓ is the drive instruction or the stop instruction, the individual fan 7 installed on the battery sub-rack 2 at which the gas leakage occurs is brought into a forward rotation. Then, the respective individual fans 7 installed on the battery sub-racks 2 where the gas leakage does not occur are brought into a reverse rotation. In the same manner as the first example, in the state of the gas leakage, the collective fans 3 are reliably driven, and the rating air volume of the collective fans 3 is larger than that of each of the individual fans.

As described above, by using the method of control according to this example, the power consumption is larger than that in the first example, but an air volume which can be fed to the battery sub-rack 2 where the gas leakage occurs is larger than that is the first example. Therefore, the concentration of gas may be lowered further instantaneously. As described thus far above, by using the present invention, the batter system which is capable of lowering the concentration of gas reliably and further quickly when the gas leakage occurs can be provided.

### Reference Signs List

- 1, 1A, 1B, 1C: battery rack
- 2, 2a, 2b, 2c: battery sub-rack
- 3: collective fan
- 6, 6a, 6b, 6c: gas leakage sensing apparatus
- 7, 7a, 7b, 7c: individual fan
- M1 to Mn, M11 to M1n: battery module
- N, Na, Nb, Nc: battery module group

## Claims

1. A battery system comprising a battery rack having a plurality of battery sub-racks in which a plurality of battery modules are accommodated,
wherein the battery sub-racks each include a first fan and a gas detecting apparatus,
the battery rack includes a second fan configured to exhaust the air exhausted from the first fan of a plurality of the battery sub-racks,
the second fan is configured to have a rating air volume larger than the rating air volume of the first fan, and
when a predetermined gas is sensed by the gas detecting apparatus in one of the battery sub-racks, the second fan is driven in a state in which the first fan of the one of the battery sub-racks is driven, and the first fans of the battery sub-racks other than the one of the battery sub-racks are stopped.

2. A battery system comprising a battery rack having a plurality of battery sub-racks in which a plurality of battery modules are accommodated,
wherein the battery sub-racks each include a first fan and a gas detecting apparatus,
the battery rack includes a second fan configured to exhaust the air exhausted from the first fan of a plurality of the battery sub-rack,
the second fan is configured to have a rating air volume larger than the rating air volume of the first fan, and
when a predetermined gas is sensed by the gas detecting apparatus of one of the battery sub-racks, the second fan is driven in a state in which the first fan of the one of the battery sub-racks is driven, and any of the first fans of the battery sub-racks other than the one of the battery sub-racks is stopped.

3. A battery system comprising a battery rack having a plurality of battery sub-racks in which a plurality of battery modules are accommodated,
wherein the battery sub-racks each include a first fan, the battery module includes a cell control circuit configured to collect voltage information of the battery cell which constitutes the battery module,
the battery rack includes a second fan configured to exhaust the air exhausted from the first fan of a plurality of the battery sub-rack,
the second fan is configured to have a rating air volume larger than the rating air volume of the first fan, and
when the voltage of the battery cell in the one of the battery modules becomes an abnormal voltage,
the second fan is driven in a state in which the first fan of the battery sub-rack having the battery module in which the abnormal voltage is sensed is driven, and the first fans of the battery sub-racks having the battery module in which the abnormal voltage is not sensed are stopped.

4. The battery system according to any one of Claims 1 to 3, wherein the rating air volume of the second fan is equal to the rating air volume of the first fan multiplied by the number of the battery sub-racks.

5. The battery system according to any one of Claims 1 to 4, wherein the air exhausted from the first fan is exhausted to a space communicated to the second fan.

6. The battery system according to any one of Claims 1 to 5, wherein the plurality of battery modules accommodated in the battery sub-racks are arranged respectively via a space therebetween.

7. The battery system according to any one of Claims 1 to 6, wherein the first fan is configured to be capable of rotating in the reverse direction.
